# EUROPÄISCHE PATENTANMELDUNG

(11) **EP 2 439 553 A1**
(43) Veröffentlichungstag der Anmeldung: **11.04.2012**
(21) Anmeldenummer: 11179694.2
(22) Anmeldetag: 01.09.2011
(51) Int. Cl.: G01S 7/40

(54) **Sensor, Justageverfahren und Vermessungsverfahren für einen Sensor**

(30) Priorität: 11.10.2010 DE 102010042276
(71) Anmelder: Robert Bosch GmbH, 70442 Stuttgart (DE)
(72) Erfinder: Weber, Dieter, 71229 Leonberg (DE); Zeller, Gerald, 71636 Ludwigsburg (DE)

(57) **Zusammenfassung**

Die Erfindung betrifft einen Sensor (501) umfassend ein Sensorgehäuse (503), wobei das Sensorgehäuse (503) mindestens drei Referenzmessbereiche (505) zum Bilden einer Referenzebene (319) aufweist.

Die Erfindung betrifft ferner ein Justageverfahren und ein Vermessungsverfahren.

## Beschreibung

Die Erfindung betrifft einen Sensor sowie ein Justageverfahren und ein Vermessungsverfahren für einen Sensor.

### Stand der Technik

Die Fertigung von Radarsensoren für Fahrzeuge unterliegen insbesondere den Toleranzen der verwendeten mechanischen Komponenten, auf bzw. in die die Antennen der Radarkomponenten montiert sind. Somit ergibt sich in der Regel eine mechanische Sensorachse und eine Radarsensorachse, die von einander abweichen.

Die Montage des Radarsensors im Fahrzeug erfolgt so, dass die Radarachse in einem genau definierten Winkel zur Fahrachse ausgerichtet ist. Dies kann insbesondere auf zwei verschiedene Arten erfolgen.

Der Sensor ist am Fahrzeug verbaut und in Betrieb. D.h. er sendet Radarwellen aus. Aus den reflektierten Radarintensitäten wird der Istwert α von Azimut- und Elevationswinkel der Radarachse in Bezug zur Fahrachse des Fahrzeugs ermittelt. Mittels Justagemittel am Halter des Radarsensors oder am Radarsensor selbst werden die Abweichungen zum Sollwert, d.h. der Winkel zwischen Radarachse und der Fahrachse behoben. Diese Justageart kann auch als eine aktive Justage bezeichnet werden.

Nachteilig ist insbesondere, dass hierfür ein Radarsensor zur Justage in Betrieb sein muss und insofern Radarwellen aussendet, welche beispielsweise elektrische Verbraucher stören können.

Für die zweite Justageart, welche auch als eine passive Justage bezeichnet werden kann, wird zusätzlich ein auf dem Radarsensor aufgeklebter oder aufgedampfter Spiegel verwendet. Im Fertigungswerk des Radarsensors wird eine Winkelabweichung β zwischen Radarachse und einer Spiegelnormalen ermittelt und im Sensor abgespeichert. Beim Fahrzeughersteller wird dann eine Abweichung y der Spiegelnormalen zur Fahrachse gemessen. Die abgespeicherten Werte werden als Korrekturfaktoren ausgelesen, berechnet und berücksichtigt. Mittels Justage wird die Radarachse auf die Fahrachse korrigiert.

Nachteilig ist insbesondere, dass sich die Spiegelposition aufgrund von Alterung der Klebefolie im Laufe der Zeit ändern kann. Insbesondere ändert die Klebefolie unter dem Spiegel während der Lebensdauer des Sensors ihre Eigenschaften. Sie wird beispielsweise aufgrund von hohen Temperaturen spröde oder quellt eventuell aufgrund einer hohen Luftfeuchtigkeit auf. Somit stimmen die ursprünglich gemessenen und gespeicherten Abweichungen von Radarachse und Spiegelnormalen mit den Istwerten nicht mehr überein. Dadurch ist eine passive Justage im Servicefall, d.h. insbesondere bei einer Funktionsüberprüfung des Radarsensors, nicht möglich.

Ferner kann die Reflektivität aufgrund von Verschmutzung und/oder Oxidation und/oder mechanischen Einflüssen der Reflektionsschicht nachlassen. Eine passive Justage kann im Servicefall nicht sicher gewährleistet werden.

### Offenbarung der Erfindung

Die der Erfindung zugrunde liegende Aufgabe kann daher darin gesehen werden, einen Sensor, ein Justageverfahren und ein Vermessungsverfahren anzugeben, welche die bekannten Nachteile überwinden und eine korrekte Justage im Servicefall ermöglichen.

Die Aufgabe wird mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Sensor umfassend ein Sensorgehäuse bereitgestellt. Es sind ferner mindestens drei Referenzmessbereiche vorgesehen, welche auf dem Sensorgehäuse angeordnet sind. Vorzugsweise sind die drei Referenzmessbereiche von einander getrennt angeordnet, insbesondere parallel zu einander. Mittels der drei Referenzmessbereiche kann eine Referenzebene gebildet werden. Eine Normale zu der Referenzebene wird als eine mechanische Sensorachse definiert.

Nach einem weiteren Aspekt wird ein Justageverfahren für einen in einem Fahrzeug angeordneten Sensor mit einem Sensorgehäuse angegeben, wobei eine Referenzebene mittels mindestens dreier Referenzmessbereiche derart gebildet wird, dass eine mechanische Sensorachse orthogonal zu der Referenzebene verläuft. Die mechanische Sensorachse wird anschließend relativ zu einer Fahrachse des Fahrzeugs ausgerichtet.

Nach einem anderen Aspekt wird ein Vermessungsverfahren für einen Sensor umfassend ein Sensorgehäuse bereitgestellt, wobei eine Referenzebene mittels mindestens dreier Referenzmessbereiche derart gebildet wird, dass eine mechanische Sensorachse orthogonal zu der Referenzebene verläuft. Eine Winkelabweichung zwischen der mechanischen Sensorachse und einer Sensorachse wird anschließend ermittelt. Das Vermessungsverfahren kann vorzugsweise in einem Sensorherstellungswerk durchgeführt werden. Insofern kann das Vermessungsverfahren beispielsweise auch als ein Werksvermessungsverfahren bezeichnet werden.

Mittels der drei Referenzmesspunkte ist es in vorteilhafter Weise ermöglicht, dass während der gesamten Lebensdauer des Sensors jederzeit die mechanische Sensorachse sicher und zuverlässig bestimmt werden kann. Es werden keine besonders reflektierende Oberflächen, beispielsweise Spiegel oder entsprechende Bedampfungen, benötigt. In einem Fertigungswerk gemessene und in dem Sensor abgespeicherte Winkelabweichungen zwischen der Sensorachse und der mechanischen Sensorachse ändern sich in vorteilhafter Weise über die Lebensdauer nicht und bleiben insofern gültig. Eine schnelle und insbesondere kostengünstige Justage im Servicefall ist somit möglich.

Der Sensor ist vorzugsweise ein Wellensensor. D.h. er sendet physikalische Wellen aus, welche an Objekten oder Hindernissen reflektiert werden können. Der Sensor empfängt vorzugsweise die reflektierten physikalischen Wellen und kann sie insofern detektieren. Hierzu weist der Sensor einen entsprechenden Sender und/oder einen entsprechenden Empfänger bzw. Detektor auf. Eine Sensorachse wird insbesondere als eine Achse parallel oder kollinear zu einem Wellenvektor 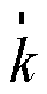 entsprechend der von dem Sensor ausgesandte sich ausbreitende Welle definiert.

Nach einer Ausführungsform ist der Sensor ein Radarsensor und/oder ein Ultraschallsensor. D.h. der Sensor sendet Radarwellen und/oder Ultraschallwellen aus. Somit kann in vorteilhafter Weise beispielsweise ein Abstand zwischen einem Fahrzeug und einem dem Fahrzeug voraus angeordnetes Hindernis, beispielsweise ein vorausfahrendes weiteres Fahrzeug, erfasst werden. In diesem Fall wird eine Sensorachse insbesondere als eine Achse parallel oder kollinear zu einem Wellenvektor 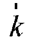 der Radarwelle bzw. der Ultraschallwelle definiert. Bei einer Radarwelle, welche eine elektromagnetische Welle ist, steht der Wellenvektor 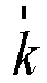 senkrecht auf dem E-Feldvektor 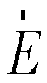 und senkrecht auf dem B-Feldvektor 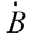 *.* Im Fall eines Radarsensors kann die Sensorachse auch als eine Radarsensorachse bezeichnet werden. Im Fall eines Ultraschallsensors kann die Sensorachse auch als eine Ultraschallsensorachse bezeichnet werden.

Nach einer Ausführungsform ist zumindest ein Referenzmessbereich für eine taktile und/oder optische Positionsbestimmung ausgebildet. So kann beispielsweise in vorteilhafter Weise mittels eines Tasters oder mehrerer Taster die Position des Referenzmessbereichs taktil bestimmt werden. Insbesondere kann so in vorteilhafter Weise mittels eines Lasers die Position des Referenzmessbereichs optisch bestimmt werden. Vorzugsweise sind alle drei Referenzmessbereiche für eine taktile und/oder optische Positionsbestimmung ausgebildet. Mittels der gemessenen Positionen der drei Referenzmessbereiche kann insbesondere die Referenzebene besonders einfach definiert werden.

Nach einer weiteren Ausführungsform umfasst zumindest ein Referenzmessbereich eine ebene Fläche. Der Referenzmessbereich kann in diesem Fall auch als eine Referenzmessfläche bezeichnet werden. Insbesondere ist der Referenzmessbereich als eine ebene Fläche gebildet. Vorzugsweise sind alle drei Referenzmessbereiche als ebene Fläche gebildet. Insbesondere sind die drei ebenen Flächen parallel zu einander angeordnet, vorzugsweise liegen die drei ebenen Flächen in einer gemeinsamen Ebene. Allgemein können die Referenzmessbereiche insbesondere in einer gemeinsamen Ebenen angeordnet sein, vorzugsweise wenn die drei Referenzmessbereiche parallel zu einander angeordnet sind. Es kann nach einer anderen Ausführungsform vorgesehen sein, dass die Fläche rau und/oder reflektierend gebildet ist. Dadurch ist insbesondere eine genauere und einfachere optische und/oder taktile Positionsbestimmung ermöglicht.

Gemäß einer anderen Ausführungsform ist zumindest ein Referenzmessbereich integral mit dem Sensorgehäuse gebildet. Vorzugsweise sind alle drei Referenzmessbereiche integral mit dem Sensorgehäuse gebildet. Der Referenzmessbereich oder die Referenzmessbereiche ist bzw. sind vorzugsweise in das Sensorgehäuse integriert. Dadurch ist es in vorteilhafter Weise ermöglicht, dass die Referenzmessbereiche bereits bei der Herstellung des Sensors in/an dem Sensorgehäuse gebildet werden können, so dass in vorteilhafter Weise eine jeweilige Position der Referenzmessbereiche sich zeitlich, insbesondere über die Lebensdauer des Sensors, relativ zur Sensorachse nicht ändert. Vorzugsweise wird bzw. werden der Referenzmessbereich bzw. die Referenzmessbereiche direkt auf einem Dom, insbesondere Radom oder Befestigungsdom, und/oder auf einer Sensorlinse angeordnet. Vorzugsweise weist das Sensorgehäuse mehrere Dome, insbesondere Radome oder Befestigungsdome, vorzugsweise vier Dome auf.

Die Erfindung wird im Folgenden anhand von bevorzugten Ausführungsbeispielen unter Bezugnahme auf Figuren näher erläutert. Hierbei zeigen:
- Fig. 1: eine aktive Justage bei einem bekannten Sensor,
- Fig. 2: eine passive Justage bei einem anderen bekannten Sensor,
- Fig. 3: eine Schrägansicht auf einen erfindungsgemäßen Sensor,
- Fig. 4: eine Seitenansicht des Sensors aus Fig. 3
- Fig. 5: eine schematische Ansicht eines weiteren erfindungsgemäßen Sensors,
- Fig. 6: ein Ablaufdiagramm eines Justageverfahrens und
- Fig. 7: ein Ablaufdiagramm eines Vermessungsverfahrens.

Im Folgenden werden für gleiche Elemente gleiche Bezugszeichen verwendet.

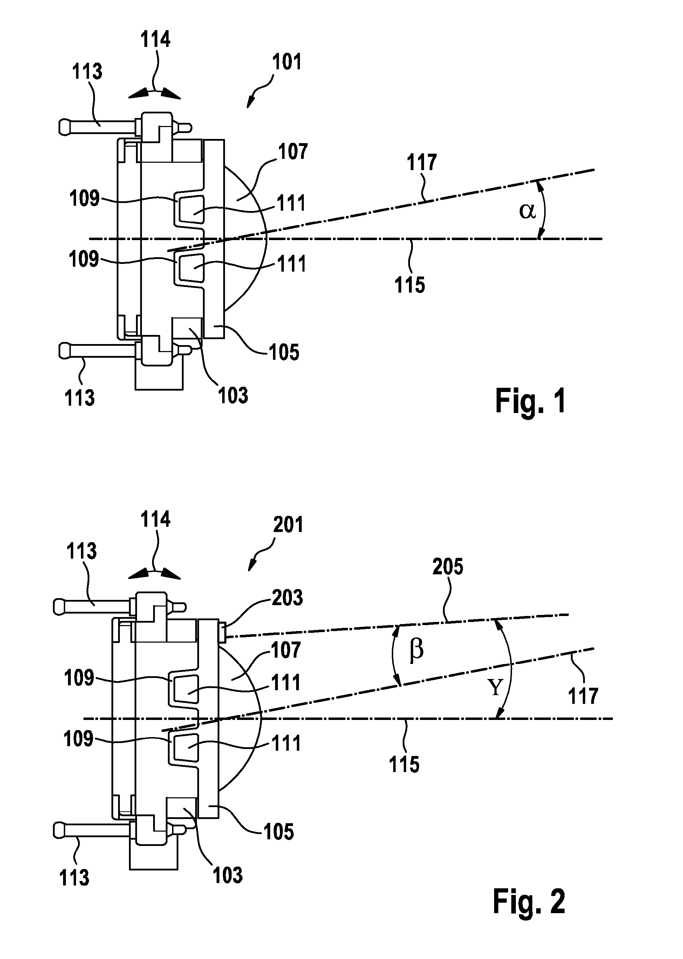

Fig. 1 zeigt eine Seitenansicht eines Sensors 101 nach dem Stand der Technik. Der Sensor 101 umfasst ein viereckiges Sensorgehäuse 103 aufweisend einen Sensorlinsendeckel 105. Des Sensorlinsendeckel 105 weist einen konkaven Bereich 107 auf. Der Sensorlinsendeckel 105 weist ferner zwei Laschen 109 auf, welche in entsprechende Aufnahmen oder Vorsprünge 111 an dem Sensorgehäuse 103 eingreifen können, so dass der Sensorlinsendeckel 105 an dem Gehäuse 103 befestigt ist. Das Sensorgehäuse 103 weist ferner vier Justagemittel 113 auf, welche jeweils an den vier Ecken des Sensorgehäuses 103 angeordnet sind. Die Justagemittel 113 sind ferner eingerichtet das Sensorgehäuse 103 in oder an ein Fahrzeug (nicht gezeigt) zu befestigen. Beispielsweise können die Justagemittel 113 Schrauben umfassen, so dass ein Abstand zwischen der entsprechenden Ecke des Sensorgehäuses 103 und der entsprechenden Befestigungsposition im Fahrzeug eingestellt werden kann. Diese Einstellmöglichkeit ist mittels eines Doppelpfeils 114 dargestellt.

Eingezeichnet ist ferner eine Fahrachse des Fahrzeugs, welche mit dem Bezugszeichen 115 gekennzeichnet ist. Eine Fahrachse des Fahrzeugs ist im Allgemeinen die Achse, entlang derer sich das Fahrzeug vorwärts oder rückwärts bewegt. Mit dem Bezugszeichen 117 ist eine Sensorachse gekennzeichnet. Ein Winkel α kennzeichnet eine Winkelabweichung zwischen der Fahrachse 115 und der Sensorachse 117. In der Fig. 1 ist lediglich eine Winkelabweichung α bezogen auf die Figurenebene eingezeichnet. Es kann auch eine Winkelabweichung bezogen auf eine Ebene senkrecht zu der Figurenebene auftreten. Die Winkelabweichung α kennzeichnet insofern einen Azimutwinkel und/oder einen Elevationswinkel der Sensorachse 117 in Bezug zu der Fahrachse 115.

Bei einem aktiven Justageverfahren ist der Sensor 101 am Fahrzeug verbaut und in Betrieb, d.h. er sendet physikalische Wellen aus. Aus den reflektierten Wellenintensitäten wird die Winkelabweichung α von Azimutwinkel und Elevationswinkel der Sensorachse in Bezug zur Fahrachse ermittelt. Die Winkelabweichung α kann auch als ein Istwert bezeichnet werden. Mittels der Justagemittel 113 können die Abweichungen zu einem Sollwert (Winkel zwischen Sensorachse 117 und Fahrachse 115) behoben werden.

Fig. 2 zeigt eine Seitenansicht eines weiteren bekannten Sensors 201. Der Sensor 201 ist gleich aufgebaut wie der Sensor 101 aus Fig. 1. Darüber hinaus umfasst der Sensor 201 einen Spiegel 203, welcher auf dem Sensorlinsendeckel 105 aufgeklebt ist. Der Spiegel 203 kann aber auch auf dem Sensorlinsendeckel 105 aufgedampft sein.

In einem Sensorfertigungswerk wird eine Winkelabweichung β zwischen der Sensorachse 117 und einer Spiegelnormalen 205 ermittelt und im Sensor 201 abgespeichert. In einem Fahrzeugherstellungswerk wird eine Abweichung Y der Spiegelnormalen 205 und der Fahrachse 115 gemessen. Die abgespeicherten Werte, insbesondere die Winkelabweichung β, werden als Korrekturfaktoren ausgelesen, berechnet und berücksichtig. Mittels der Justiermittel 113 wird die Sensorachse 117 auf die Fahrachse 115 korrigiert.

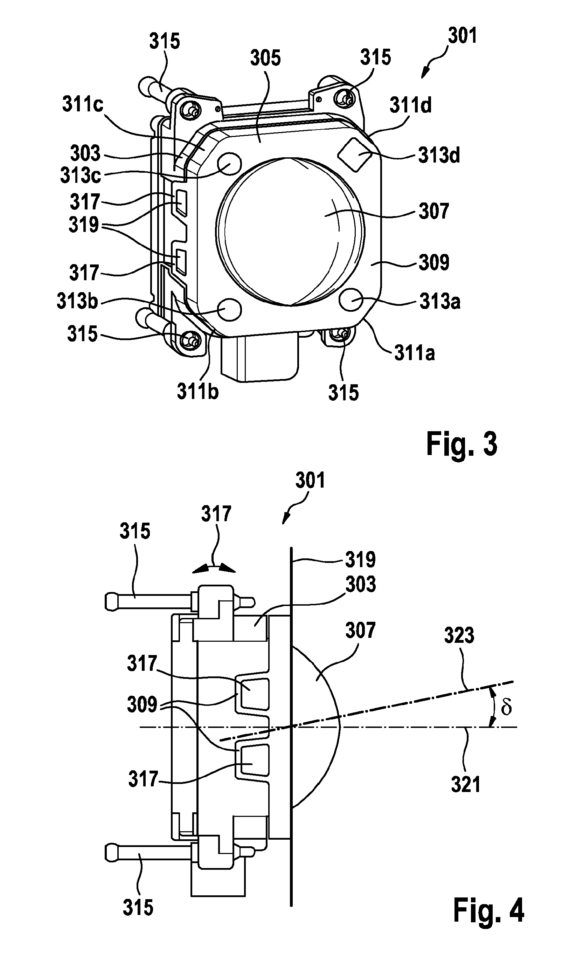

Fig. 3 zeigt eine Ansicht von schräg vorne eines erfindungsgemäßen Sensors 301. Der Sensor 301 umfasst ein achteckiges Sensorgehäuse 303 aufweisend einen achteckigen Sensorlinsendeckel 305. Der Sensorlinsendeckel 305 weist einen konkaven von dem Sensorgehäuse 303 sich weg wölbenden Bereich 307 auf. Die hier gezeigte achteckige Ausführungsform soll lediglich als beispielhaft und nicht als einschränkend betrachtet werden. Es kann gemäß anderen nicht gezeigten Ausführungsformen vorgesehen sein, dass eine Vierecksform, insbesondere eine quadratische Form, vorzugsweise eine Rechtecksform vorgesehen ist. Insbesondere kann auch eine Kreisform vorgesehen sein. Das Sensorgehäuse 303 und der Deckel 305 sind vorzugsweise aus Kunststoff.

Der Sensorlinsendeckel 305 umfasst ferner einen planaren Bereich 309 auf, welcher den konkaven Bereich 307 umgibt. Auf dem planaren Bereich 309 ist in drei Eckbereichen 311a, b, c jeweils ein Referenzmessbereich 313a, 313b und 313c angeordnet. Die Referenzmessbereiche 313a, 311 b und 313c sind vorzugsweise als eine ebene Fläche ausgebildet. Insbesondere sind die Referenzmessbereiche 313a, b, c für eine optische und/oder taktile Positionsbestimmung ausgebildet, so dass eine Position des entsprechenden Referenzmessbereichs 313a, 313b und 313c erfasst werden kann. Beispielsweise können die Referenzmessbereiche 313a, b, c eine raue Oberfläche und/oder eine reflektierende Oberfläche aufweisen. So kann insbesondere mittels Tastern oder optischer Hilfsmittel wie beispielsweise ein Laser die Position jeweils eines definierten Punktes auf den drei Referenzmessbereichen 313a, 313b und 313c gemessen, wodurch in vorteilhafter Weise eine Referenzebene definiert wird. Ein solcher Punkt kann auch als ein Referenzmesspunkt bezeichnet werden. Hierbei ist der Sensor 301 vorzugsweise in einer definierten Lage fix positioniert. Vorzugsweise weisen die Referenzmessbereiche 313a, b, c eine Fläche von mindestens 25mm² auf. Vorzugsweise weisen die Referenzmessbereiche 313a, b, c eine Rechtecksform, vorzugsweise eine Vierecksform, vorzugsweise eine Länge von 5mm und eine Höhe von 5mm auf. Gemäß einer anderen Ausführungsform können die Referenzmessbereiche 313a, b, c auch unterschiedlich gebildet sein. D.h. insbesondere, dass beispielsweise der Referenzmessbereich 313a eine raue Oberfläche aufweist und die Referenzmessbereiche 313b und 313c eine reflektierende Oberfläche aufweisen. Auch hinsichtlich der Form und Größe können sie sich beispielsweise unterscheiden.

Das Sensorgehäuse 303 umfasst ferner vier Justiermittel 315, welche in ihrer Höhe verstellbar sind, beispielsweise mittels Schrauben. Die Justiermittel 315 dienen ferner dazu, das Sensorgehäuse 303 und damit den Sensor 301 in oder an dem Fahrzeug zu befestigen. Insofern können die Justiermittel 315 auch als Befestigungsmittel bezeichnet werden. Analog zu den Sensoren 101 und 202 umfasst der Sensorlinsendeckel 305 an zwei gegenüberliegenden Seiten jeweils zwei Laschen bzw. Rastzungen 317, welche in entsprechende Rastvorsprünge 319 des Sensorgehäuses 303 einrasten können, so dass der Deckel 305 auf dem Gehäuse 303 sicher befestigt ist.

Wie in Fig. 3 zu erkennen, weisen die Referenzmessbereiche 313a, b, c eine Kreisform auf. Ferner weist der Sensorlinsendeckel 305 einen vierten Referenzmessbereich 313d auf, welche in einem vierten Eckbereich 311 d angeordnet ist. Mittels eines vierten Referenzmessbereichs ist eine besonders empfindliche und genaue Definition der Referenzebene ermöglicht.

Fig. 4 zeigt eine Seitenansicht des Sensors 301 aus Fig. 4. Eine Justagemöglichkeit ist hier mit einem Doppelpfeil 317 dargestellt. Ferner ist die mittels der vier Referenzmessbereiche 313a, b, c, d definierte Referenzebene 319 dargestellt. Eine Normale zu der Referenzebene 319 ist mit dem Bezugszeichen 321 gekennzeichnet und entspricht einer mechanischen Sensorachse. Eine Sensorachse ist mittels des Bezugszeichens 323 gekennzeichnet. Eine Winkelabweichung zwischen der Sensorachse 323 und der mechanischen Sensorachse 321 ist mit δ gekennzeichnet.

Insbesondere in einem Sensorfertigungswerk wird die Winkelabweichung δ zwischen der Sensorachse 323 und der mechanischen Sensorachse 321 ermittelt und im Sensor 301 abgespeichert. Bei einem Fahrzeughersteller oder bei einer Wartungsfirma, welche beispielsweise eine Funktionsüberprüfung des Sensors 301 vornimmt, wird eine Abweichung zwischen der mechanischen Sensorachse 321, also der Normalen der Referenzebene 319, und einer Fahrachse (nicht gezeigt) gemessen. Die gespeicherten Werte, insbesondere die Abweichung δ, werden als Korrekturfaktoren ausgelesen, berechnet und berücksichtig. Mittels der Justiermittel kann die Sensorachse 323 auf die Fahrachse ausgerichtet werden.

Sowohl bei der Ermittlung der Winkelabweichung δ als auch bei der Ermittlung der Abweichung zwischen der mechanischen Sensorachse 321 und der Fahrachse wird mittels der vier Referenzmessbereiche 313a, b, c, d die Referenzebene 319 gebildet, indem insbesondere mittels optischer und/oder taktiler Messmethoden eine entsprechende Position der Referenzmessbereiche 313a, b, c, d erfasst wird. Vorzugsweise ist der Sensor 301 als ein Radarsensor ausgebildet.

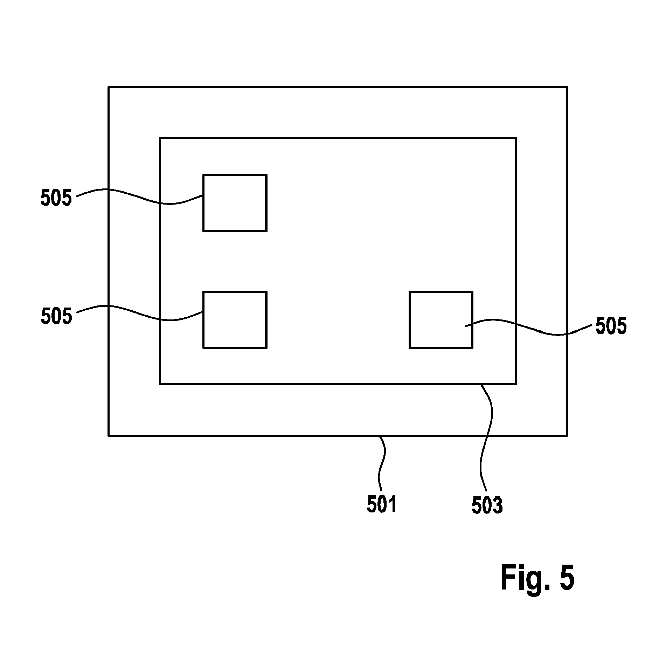

Fig. 5 zeigt einen weiteren erfindungsgemäßen Sensor 501. Der Sensor umfasst ein Sensorgehäuse 503, welches drei Referenzmessbereiche 505 aufweist. Der Sensor 501 ist als ein Radarsensor ausgebildet.

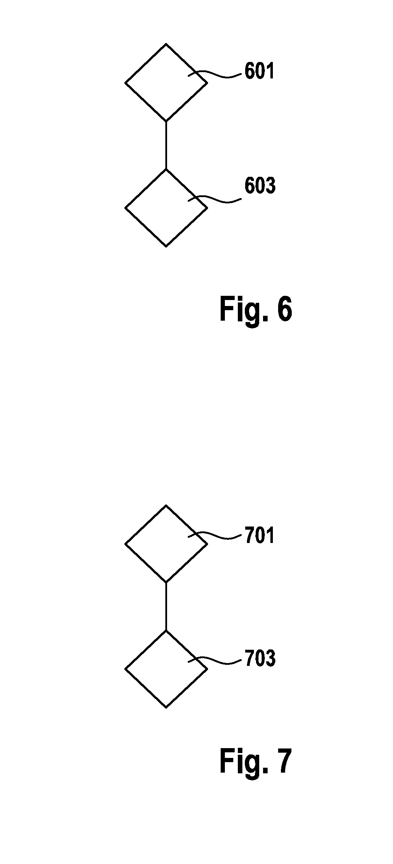

Fig. 6 zeigt ein Ablaufdiagramm eines Justageverfahrens für einen in einem Fahrzeug angeordneten Sensor mit einem Sensorgehäuse. Beispielsweise kann es sich um den Sensor 301 oder 501 handeln. In einem ersten Schritt 601 wird mittels mindestens dreier Referenzmessbereiche eine Referenzebene gebildet, wobei eine mechanische Sensorachse orthogonal zu der Referenzebene verläuft. In einem folgenden Schritt 603 wird die mechanische Sensorachse relativ zu einer Fahrachse ausgerichtet.

Fig. 7 zeigt ein Ablaufdiagramm eines Vermessungsverfahrens für einen Sensor umfassend ein Sensorgehäuse. Beispielsweise kann es sich um den Sensor 301 oder 501 handeln. In einem ersten Schritt 701 wird eine Referenzebene mittels mindestens dreier Referenzmessbereiche gebildet, wobei eine mechanische Sensorachse orthogonal zu der Referenzebene verläuft. In einem folgenden Schritt 703 wird eine Winkelabweichung zwischen der mechanischen Sensorachse und einer Sensorachse ermittelt. Nach einer nicht gezeigten Ausführungsform kann diese Winkelabweichung in dem Sensor gespeichert werden und als Korrekturfaktor bei dem erfindungsgemäßen Justageverfahren verwendet werden.

Zusammenfassend besteht der Kern der Erfindung insbesondere darin, einen Sensor mit mindestens drei Referenzmessbereichen bereitzustellen, wobei die Referenzmessbereiche vorzugsweise am Radom und/oder an einer Sensorlinse angeordnet werden können, so dass jederzeit, auch über die Lebensdauer, eine mechanische Sensorachse sicher bestimmt werden kann. Die Lage bzw. Position der drei Referenzmessbereiche wird insbesondere so gewählt, dass diese ihre Position über die Lebensdauer zur Sensorachse nicht verändern. Es werden im Gegensatz zum Stand der Technik keine besonders reflektierenden Oberflächen wie beispielsweise Spiegel oder eine Bedampfung benötigt, so dass in vorteilhafter Weise auf einen solchen Spiegel verzichtet werden kann. Dadurch werden insbesondere Kosten und Material eingespart. Die ursprünglich eingespeicherten Werte bezüglich der Abweichungen bleiben insbesondere über die Lebensdauer des Sensors gültig. Da eine Bestimmung der Referenzebene bereits mit drei Referenzmessbereichen möglich ist, kann das Justageverfahren auch als ein 3-Punkt-Justageverfahren bezeichnet werden. Das Vermessungsverfahren kann auch als ein 3-Punkt-Vermessungsverfahren bezeichnet werden. Vorzugsweise ist der Sensor als ein Radarsensor gebildet. Vorzugsweise als ein Mittelstreckenradarsensor. Nach weiteren bevorzugten Ausführungsformen kann der Sensor auch als ein Nahbereichsradarsensor, ein Mittelbereichsradarsensor oder als ein Fernbereichsradarsensor gebildet sein. Das Vermessungsverfahren und das Justageverfahren sind insbesondere entsprechend mit den vorgenannten Sensoren anwendbar bzw. durchführbar.

## Patentansprüche

1. Sensor (501) umfassend ein Sensorgehäuse (503), **dadurch gekennzeichnet, dass** das Sensorgehäuse (503) mindestens drei Referenzmessbereiche (505) zum Bilden einer Referenzebene (319) aufweist.

2. Sensor (501) nach Anspruch 1, wobei zumindest ein Referenzmessbereich (505) für eine taktile Positionsbestimmung ausgebildet ist.

3. Sensor (501) nach Anspruch 1 oder 2, wobei zumindest ein Referenzmessbereich (505) für eine optische Positionsbestimmung ausgebildet ist.

4. Sensor (501) nach einem der vorherigen Ansprüche, wobei zumindest ein Referenzmessbereich (505) eine ebene Fläche umfasst.

5. Sensor (501) nach einem der vorherigen Ansprüche, wobei das Sensorgehäuse (503) einen Linsenbereich (309) aufweist, in welchem zumindest ein Referenzmessbereich (505) angeordnet ist.

6. Sensor (501) nach einem der vorherigen Ansprüche, wobei das Sensorgehäuse (503) einen Befestigungsdom zur weiteren Befestigung des Sensorgehäuses (503) aufweist, wobei zumindest ein Referenzmessbereich (505) auf dem Befestigungsdom angeordnet ist.

7. Sensor (501) nach einem der vorherigen Ansprüche, wobei zumindest ein Referenzmessbereich (505) integral mit dem Sensorgehäuse (503) gebildet ist.

8. Sensor (501) nach einem der vorherigen Ansprüche, wobei der Sensor (501) ein Radarsensor ist.

9. Justageverfahren für einen in einem Fahrzeug angeordneten Sensor (501) mit einem Sensorgehäuse (503), **dadurch gekennzeichnet, dass** eine Referenzebene (319) mittels mindestens dreier Referenzmessbereiche (505) gebildet wird, wobei eine mechanische Sensorachse (321) orthogonal zu der Referenzebene (319) verläuft, und die mechanische Sensorachse (321) relativ zu einer Fahrachse des Fahrzeugs ausgerichtet wird.

10. Vermessungsverfahren für einen Sensor (501) umfassend ein Sensorgehäuse (503), **dadurch gekennzeichnet, dass** eine Referenzebene (319) mittels mindestens dreier Referenzmessbereiche (505) gebildet wird, wobei eine mechanische Sensorachse (321) orthogonal zu der Referenzebene (319) verläuft, und eine Winkelabweichung zwischen der mechanischen Sensorachse (321) und einer Sensorachse (323) ermittelt wird.
